# EUROPÄISCHE PATENTSCHRIFT

(11) **EP 2 911 021 B1**
(45) Veröffentlichungstag und Bekanntmachung des Hinweises auf die Patenterteilung: **06.04.2022**
(21) Anmeldenummer: 15156006.7
(22) Anmeldetag: 20.02.2015
(51) Int. Cl.: G05B 19/042, G05B 15/02

(54) **VERFAHREN ZUM BETRIEB EINES HEIMAUTOMATISIERUNGSSYSTEMS**
METHOD FOR OPERATING A HOME AUTOMATION SYSTEM
PROCÉDÉ DE FONCTIONNEMENT D'UN SYSTÈME D'AUTOMATISATION DOMESTIQUE

(30) Priorität: 20.02.2014 DE 102014002242
(43) Veröffentlichungstag der Anmeldung: 26.08.2015
(73) Patentinhaber: ARCA Beteiligungen GmbH, 46414 Rhede (DE)
(72) Erfinder: Milde, Per-Michael, 46325 Borken (DE); Kemper, Patrick, 48155 Münster (DE)
(74) Vertreter: Gottschald, Jan

(56) Entgegenhaltungen:
- EP-A1- 2 000 867
- EP-A2- 2 631 723
- DE-A1-102005 003 102
- DE-T2- 60 009 600
- FR-A1- 2 861 123
- FR-A1- 2 901 046
- US-A1- 2013 073 094

## Beschreibung

Die Erfindung betrifft ein Verfahren zum Betreiben eines Heimautomatisierungssystems gemäß dem Oberbegriff von Anspruch 1.

Moderne Heimautomatisierungssysteme umfassen regelmäßig eine Vielzahl von Peripherievorrichtungen, wie Motoren zum Bewegen von Rollläden, Markisen, Garten- oder Garagentoren sowie Gurtwickler, Sensoren verschiedener Art einschließlich Sonnensensoren oder Temperatursensoren, Dimmaktoren für Beleuchtungsvorrichtungen, Türkontaktsensoren, Heizkörperstellantriebe und viele weitere derartige Komponenten zur automatischen Steuerung entsprechender Heimvorrichtungen. Solche Heimautomatisierungssysteme sind beispielsweise aus der FR 2 861 123 A1, DE 600 09 600 T2, FR 2 901 046 A1, EP 2 000 867 A1, DE 10 2005 003102 A1 oder EP 2 63 1 723 A2 bekannt.

Die Peripherievorrichtungen können als Module weitgehend flexibel zu einem einzelnen Heimautomatisierungssystem zusammengefügt werden. Regelmäßig ist dann auch eine Zentralsteuervorrichtung vorhanden, welche mittelbar oder unmittelbar mit diesen Peripherievorrichtungen kommuniziert, um sie aktivierend für eine Bewegung anzusteuern, sie zu koordinieren, Programmabläufe zu starten oder zu beenden und insgesamt ein Zusammenspiel der Peripherievorrichtungen nach den Wünschen des Benutzers zu gewährleisten. Die Zentralsteuervorrichtung kann dabei mit den Peripherievorrichtungen über ein drahtgebundenes oder drahtloses Netzwerk kommunizieren.

Aus dem Stand der Technik ist es bekannt, dass bestimmte Vorgänge von Peripherievorrichtungen und insbesondere von Aktoren wie etwa Motoren unter den Peripherievorrichtungen auf Signale von Signalgebern des Heimautomatisierungssystems, wenn die Signale eine Auslösebedingung erfüllen, gestartet bzw. ausgelöst werden sollen. Solche Signalgeber, welche ein Signal erzeugen und nicht einfach nur weiterleiten, können z. B. Sensoren, Zeitgeber oder Zeitschaltuhren sein. So kann etwa an einer Rollladensteuerung vorgesehen sein, dass ab einer bestimmten, von einem Sonnensensor gemessenen Sonnenintensität, der Rollladenmotor zum Schließen des Rollladens angesteuert wird. Ebenso kann auf das Erfassen eines starken Windes durch einen Markisensensor ein Motor zum Einfahren der Markise angesteuert werden. Schließlich kann eine Heizung über einen Heizkörperstellantrieb zu bestimmten Uhrzeiten so angesteuert werden, dass sich jeweils für bestimmte Zeitabschnitten unterschiedliche Raumtemperaturen ergeben. Bekannt ist ebenso, eine solche aktivierende Ansteuerung eines Aktors basierend auf einer Verknüpfung von Signalen von Signalgebern auszulösen, sodass das Signal eines Sonnensensors etwa mit demjenigen eines Zeitgebers für das Auslösen der Bewegung des Rollladenmotors verknüpft wird.

Nachteilig an den meisten bekannten Heimautomatisierungssystemen ist allerdings, dass bei der Bewertung solcher Auslösebedingungen basierend auf Signalgeber des Heimautomatisierungssystems lediglich auf innerhalb des Heimautomatisierungssystems vorliegende Daten, insbesondere Sensordaten und Zeitsignale, abgestellt wird. Mithin gibt es anderweitige Informationen, wie etwa Wetterprognosen u. dgl., welche prinzipiell für eine solche aktivierende Ansteuerung relevant wären, aber nicht berücksichtigt werden, weswegen es zu Ansteuerungen kommen kann, welche an sich nicht erwünscht sind, z. B. das Öffnen eines Rollladens, während sich ein Sturm unmittelbar nähert.

Die FR 2 861 123 A1 schlägt nun vor, dass eine externe Informationsquelle genutzt wird. Hier wird ein Externsignal von einem externen Server bereitgestellt, welcher beispielsweise von dem Typ einer lokalen Wetterstation ist. Das Hinzufügen von zusätzlichen Informationsquellen erfordert in der Regel jedoch auch den Umgang mit Zielkonflikten, welche aufgelöst werden müssen.

Vor diesem Hintergrund besteht die Aufgabe der Erfindung darin, ein Verfahren zum Betreiben eines Heimautomatisierungssystems bereitzustellen, bei welchem die Entscheidungsgrundlage für eine aktivierende Ansteuerung einer Aktoranordnung auf Signale von Signalgebern verbreitert werden kann und so eine einfache, benutzerfreundliche und sichere Heimautomatisierung bereitgestellt werden kann.

Diese Aufgabe wird bezogen auf Verfahren zum Betreiben eines Heimautomatisierungssystems gemäß dem Oberbegriff von Anspruch 1 durch die Merkmale des kennzeichnenden Teils von Anspruch 1 gelöst.

Wesentlich für die Erfindung ist die Erkenntnis, dass die Zentralsteuervorrichtung dazu verwendet werden kann, eine logische Und-Verknüpfung zwischen der an sich für die Ansteuerung des Aktors maßgeblichen Auslösebedingung mit einem Externsignal bzw. mit einer auf das Externsignal bezogenen Freigabebedingung herzustellen, wobei dieses Externsignal außerhalb des Heimautomatisierungssystems erzeugt wurde und daher von außen an das Heimautomatisierungssystem getragen wird. Dabei ist ausschlaggebend, dass die für das Externsignal maßgebliche Information außerhalb des Heimautomatisierungssystems erzeugt wurde. Eine bloße Umformung im Heimautomatisierungssystem verändert die Erzeugung nicht. Durch die Und-Verknüpfung der - internen - Auslösebedingung einerseits mit der durch das Externsignal äußeren Freigabebedingung andererseits erfolgt die Ansteuerung gemäß der Auslösebedingung im Ergebnis nur dann, wenn sie durch das Externsignal und die entsprechende Freigabebedingung freigegeben ist. Im Ergebnis resultiert eine Erhöhung der Intelligenz der Aktoransteuerung des Heimautomatisierungssystems insgesamt.

Über die grafische Ein-Ausgabeschnittstelle der Bedienvorrichtung kann eine sowohl einfache als auch flexible Möglichkeit der Einstellung des vorschlagsgemäßen Verfahrens bereitgestellt werden.

Die Unteransprüche beschreiben bevorzugte Ausgestaltungen des in Anspruch 1 beanspruchten Gegenstands.

Die Unteransprüche 4 bis 8 beschreiben bevorzugte Arten von Quellen für die Eingangssignale, welche eine Grundlage für das Externsignal oder das Externsignal selbst bilden können.

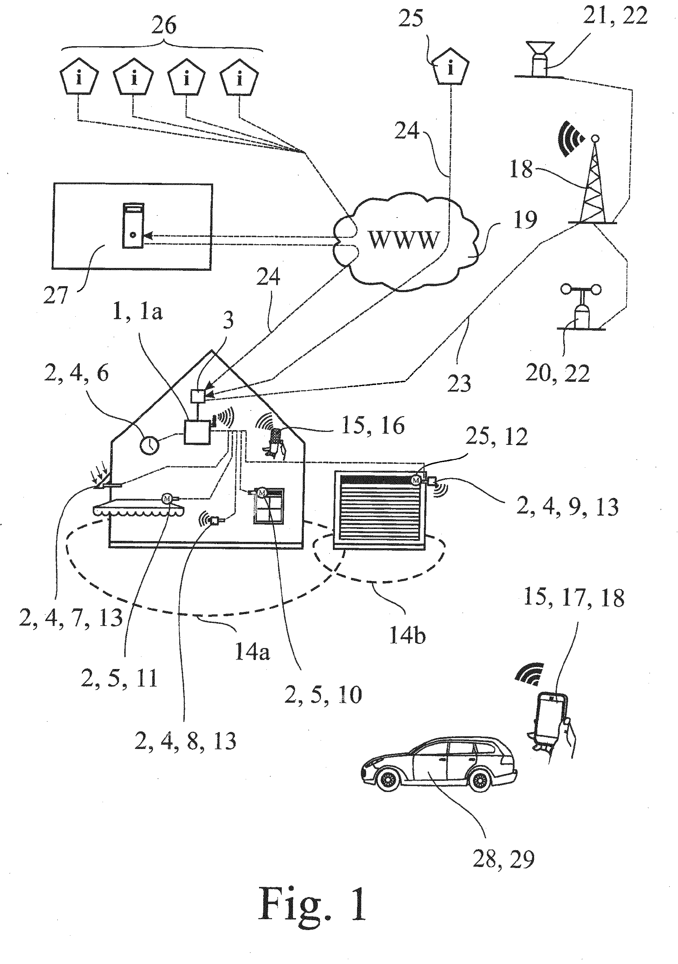

Weitere Einzelheiten, Merkmale, Ziele und Vorteile der vorliegenden Erfindung werden nachfolgend anhand der Zeichnung eines bevorzugten Ausführungsbeispiels erläutert. In der Zeichnung zeigt
- Fig. 1: eine schematische Ansicht eines Heimautomatisierungssystems zum Ausführen des vorschlagsgemäßen Verfahrens.

Das vorschlagsgemäße Verfahren dient zum Betreiben eines Heimautomatisierungssystems, wie es gemäß dem Ausführungsbeispiel in der Fig. 1 dargestellt ist. Dieses Heimautomatisierungssystem weist eine Zentralsteuervorrichtung 1 und Peripherievorrichtungen 2 auf. In diesem Beispiel handelt es sich bei der Zentralsteuervorrichtung 1 um eine elektronische Modulbox 1a, welche lediglich einige Tasten und keinen Bildschirm als Bedienoberfläche aufweist. Denkbar ist nun auch, dass die Zentralvorrichtung 1 auch eine umfangreichere Bedienoberfläche aufweist. Die Zentralsteuervorrichtung 1 ist mit einem Router 3 verbunden und entweder selbst oder über diesen Router 3 zur drahtlosen und drahtgebundenen Kommunikation, insbesondere mit einem Telefonnetz, dem Internet und etwa einem Mobilfunknetz in der Lage. Prinzipiell kann die Zentralsteuervorrichtung 1 auch mehrere Komponenten in verschiedenen Gehäusen umfassen, was auch für jede einzelne Peripherievorrichtung 2 gelten kann.

Die Peripherievorrichtungen 2 umfassen eine Signalgeberanordnung 4, sowie eine Aktoranordnung 5. Unter der Signalgeberanordnung 4 sind eine oder mehrere Vorrichtungen zu verstehen, welche aus sich heraus, das heißt also nicht bedieneingabebetrieben, ein Signal erzeugen und ausgeben können. Im vorliegenden Beispiel sind dies eine Zeitschaltuhr 6, ein Sonnensensor 7, ein Innenbewegungssensor 8 und ein Garagentorbewegungssensor 9, welcher eine Bewegung in der Umgebung des Garagentors erfassen soll. Eine Ansteuerung der Signalgeberanordnung 4 umfasst insbesondere ein Empfangen und/oder Auslesen des jeweiligen erzeugten Signals der Signalgeberanordnung 4. Die Aktoranordnung 5 wiederum umfasst diejenigen Peripherievorrichtungen 2, bei denen auf eine aktivierende Ansteuerung eine Bewegung, Verstellung oder sonstige Ausgabe erfolgt. Hier sind es speziell ein Rollladenmotor 10, ein Markisenmotor 11 und ein Garagentormotor 12.

Vorschlagsgemäß sind die Peripherievorrichtungen 2 mit der Zentralsteuervorrichtung 1 nachrichtentechnisch verbindbar und von dieser ansteuerbar. Vorzugsweise kann die Kommunikation zwischen der jeweiligen Peripherievonichtung 2 und der Zentralsteuervorrichtung 1 in beide Richtungen erfolgen.

Vorschlagsgemäß ist weiter vorgesehen, dass die Zentralsteuervorrichtung 1 dazu eingerichtet ist, in einem eingeschalteten Betriebszustand die Aktoranordnung 5 aktivierend anzusteuern, wenn ein oder mehrere Auslösesignale der Signalgeberanordnung 4 eine Auslösebedingung erfüllen ist. Eine solche Auslösebedingung kann dabei durch die Über- oder Unterschreitung eines Grenzwerts durch das Auslösesignal oder auch nur durch das bloße Auftreten des Auslösesignals erfüllt sein. Ferner kann die aktivierende Ansteuerung auch nur eine einzelne Peripherievorrichtung 2 der Aktoranordnung 5 betreffen, im Beispiel der Fig. 1 etwa den Rollladenmotor 10. Wiederum beispielhaft wäre das Bewegen des Rollladenmotors 10 in Abwärtsrichtung, wenn die Zeitschaltuhr 6 ein Auslösesignal gemäß einem programmierten Schaltzeitpunkt auslöst und das Auftreten dieses Auslösesignals die Auslösebedingung ist.

Wie festgestellt kann die Zentralsteuervorrichtung 1 verschiedene Betriebszustände annehmen, wobei hier in erster Linie ein eingeschalteter und ein ausgeschalteter Betriebszustand in Betracht kommen. Neben diesen können auch noch weitere Betriebszustände wie zum Beispiel ein Stand-by-Betriebszustand oder ein Alarmbetriebszustand möglich sein. Dabei entspricht der eingeschaltete Betriebszustand der normalen Funktionsweise der Zentralsteuervorrichtung 1, in welcher die meisten Funktionen der Zentralsteuervorrichtung 1 bereitstehen.

Vorschlagsgemäß ist die Zentralsteuervorrichtung 1 auch dazu eingerichtet, in dem eingeschalteten Betriebszustand die Peripherievorrichtung 2 ggf. gemäß Direktbedieneingaben anzusteuern. Das bedeutet, dass wenn Direktbedieneingaben in diesem Sinne vorgesehen sind, die Zentralsteuervorrichtung 1 die Peripherievorrichtung 2 im eingeschalteten Betriebszustand entsprechend ansteuert. Unter einer Direktbedieneingabe ist vorliegend eine mittelbare oder unmittelbare Nachricht an die Zentralsteuervorrichtung 1 gemeint, welche auf die Bedieneingabe eines Benutzers zurückgeht und eine spezifische Ansteuerungsanweisung für die Aktoranordnung 5 enthält. Das könnte zum Beispiel darin bestehen, den Markisenmotor 11 bis zum maximalen Ausfahren der Markise oder für die Dauer der Betätigung einer Eingabetaste anzusteuern. Alternativ könnte der Rollladenmotor 10 für eine spezifische Zeit in Auf- oder Abwärtsrichtung angesteuert werden. Die Direktbedieneingabe entspricht also einer unmittelbaren Vorgabe der Ansteuerung der Aktoranordnung 5 und stellt - gemäß der obigen Definition - kein Auslösesignal einer Signalgeberanordnung 4 dar.

Das vorschlagsgemäße Verfahren ist nun dadurch gekennzeichnet, dass die Zentralsteuervorrichtung 1 die aktivierende Ansteuerung der Aktoranordnung 5 in Abhängigkeit von einer logischen Und-Verknüpfung der Auslösebedingung mit einer Freigabebedingung eines Externsignals durchführt, welches Externsignal außerhalb des Heimautomatisierungssystems erzeugt wurde. Bei dem Externsignal handelt es sich also weder um ein Signal der Signalgeberanordnung 4 noch um ein sonstiges Signal, welches innerhalb des Heimautomatisierungssystems seinen Ursprung hat.

Das vorschlagsgemäße Verfahren ist auch dadurch gekennzeichnet, dass die Zentralsteuervorrichtung 1 den eingeschalteten Betriebszustand auf das Externsignal beibehält, welches ggf. verschieden zu den Direktbedieneingaben ist. Das Externsignal ist also erstens ein Signal, welches nicht zu einem Verlassen des eingeschalteten Betriebszustands der Zentralsteuervorrichtung 1 führt. Es handelt sich also weder um ein Ausschaltsignal noch um ein Notaussignal o. dgl.. Zweitens ist auch keine Direktbedieneingabe im obigen Sinne, sofern die Zentralsteuervorrichtung 1 zu der Verarbeitung einer Direktbedieneingabe wie oben beschrieben eingerichtet ist. Prinzipiell kann die Freigabebedingung analog zu der Auslösebedingung verstanden werden, sodass die Freibedingung bereits durch das Empfangen eines Externsignals oder durch einen von einem Nullsignal abweichenden Pegel des Externsignals erfüllt sein kann. Ebenso kommt aber das Über- oder Unterschreiten eines Grenzwerts infrage.

Die aktivierende Anschaltung der Aktoranordnung 5 setzt also im Ergebnis voraus, dass einerseits die obige Auslösebedingung durch die Auslösesignale oder das Auslösesignal und andererseits die Freigabebedingung durch das Externsignal gegeben ist. Ist die Freigabebedingung nicht erfüllt, so wird trotz der Erfüllung der Auslösebedingung die aktivierende Anschaltung der Aktoranordnung 5 durch die Zentralsteuervorrichtung 1 unterbleiben.

Wie für das Ausführungsbeispiel beschrieben, kann die Signalgeberanordnung 4 auch Zeitgeber wie die Zeitschaltuhr 6 umfassen. Bevorzugt ist es, dass die Signalgeberanordnung 4 eine Sensoranordnung 13 umfasst und dass das Auslösesignal auf einen von der Sensoranordnung 13 erfassten Messwert basiert. Im Beispiel der Fig. 1 gehören der Sonnensensor 7, der Innenbewegungssensor 8 und der Garagentorbewegungssensor 9 zu der Sensoranordnung 13. So könnte das Auslösesignal auf einen von dem Sonnensensor 7 erfassten Lichteinfall basieren. Das Auslösesignal könnte auch auf einer Erfassung durch den Innenbewegungssensor 8 oder durch den Garagentorbewegungssensor 9 in einem jeweiligen Erfassungsbereich 14a, b basieren.

Die obige Auslösebedingung und zusätzlich oder alternativ die Freigabebedingung kann einstellbar sein, wobei hier insbesondere die Einstellbarkeit über eine bevorzugt tragbare Bedienvorrichtung 15 infrage kommt. Bei einer solchen Bedienvorrichtung 15 kann es sich einerseits um eine der Zentralsteuervorrichtung 1 zugeordnete Fernbedienung 16 handeln, welche dann nur in einer Nahdistanz zur Zentralsteuervorrichtung 1 verwendbar ist. Es kann sich aber auch um ein Smartphone 17 handeln, welches dann über ein GSM-Netz 18 oder das Internet 19 eine Verbindung mit der Zentralsteuervorrichtung 1 herstellen kann.

Dementsprechend ist es bevorzugt, dass die Bedienvorrichtung 12 über eine Drahtlosverbindung und hier vorzugsweise über eine Mobilfunkverbindung mit der Zentralsteuervorrichtung 1 nachrichtentechnisch verbindbar ist. Alternativ oder zusätzlich kann sie auch über eine Internetverbindung der Zentralsteuervorrichtung 1 nachrichtentechnisch verbindbar sein.

Das Externsignal selbst kann wiederum auf verschiedenen Signalen basieren, welche im gleichen Sinne außerhalb des Heimautomatisierungssystems erzeugt wurden und somit ihren Ursprung haben wie das Externsignal selbst. Diese Signale können als Eingangssignale bezeichnet werden. Hier ist bevorzugt vorgesehen dass, das Externsignal auf einer logischen Verknüpfung einer Mehrzahl von Eingangssignalen basiert. Unter logischen Verknüpfungen sind alle booleschen Operatoren zu verstehen, welche etwa auf eine Auswertung des jeweiligen Eingangssignals bezogen auf eine Grenzschwelle o. dgl. angewandt werden können. Im einfachsten Fall, und nicht gemäß dem beanspruchten Gegenstand, besteht eine solche logische Verknüpfung darin, dass das Externsignal genau dem einzelnen Eingangssignal entspricht. Andererseits kann entsprechend einer Variante des beanspruchten Gegenstands eine solche logische Verknüpfung auch mehrstufig sein, was bedeutet, dass das Ergebnis einer solchen logischen Verknüpfung wiederum einer logischen Verknüpfung unterzogen wird, deren Resultat schlussendlich in dem Externsignal mündet. Entsprechend dem beanspruchten Gegenstand ist diese logische Verknüpfung benutzerdefiniert und speziell über die Bedienvorrichtung 15 benutzerdefinierbar.

Weiter ist es bevorzugt, dass mindestens ein Eingabesignal der Mehrzahl von Eingabesignalen zumindest teilweise - also zumindest eines dieser Eingangssignale - auf einem jeweiligen Sensorsignal basiert, wobei das jeweilige Sensorsignal bevorzugt ein Umgebungssensorsignal ist. In dem Ausführungsbeispiel der Fig. 1 könnte ein solches Umgebungssensorsignal einerseits von einem Wetterradar 20 oder einer Schadstoffmessstelle 21 für die Umgebungsluft erzeugt werden. So könnte das Wetterradar 20 vor einem Sturm warnen, welcher durch den Sonnensensor 7 noch nicht erfasst wird und auch die Schadstoffmessstelle 21 die ansonsten anstehende Öffnung von Fenstern, Türen oder Garagentoren wegen einer erfassten Schadstoffbelastung verhindern.

Dementsprechend kann vorgesehen sein, dass mindestens ein Eingabesignal der Mehrzahl von Eingabesignalen zumindest teilweise - also wiederum zumindest eines der Eingangssignale - von einer entfernt angeordneten - welche entfernte Anordnung sich auf das Heimautomatisierungssystem bezieht - Externfernsensoranordnung 22 erzeugt wurde. Im Beispiel der Fig. 1 könnte dies das obige Wetterradar 20 oder die obige Schadstoffmessstelle 21 sein. Dann kann speziell das mindestens eine Eingangssignal über eine Datenübertragungsstrecke 23, welche hier durch das GSM-Netz 18 zur Verfügung gestellt wird und daher wie bevorzugt drahtlos ist, an die Zentralsteuervorrichtung 1 übertragen wird. Bevorzugt handelt es sich um eine Ferndatenübertragungsstrecke, was ebenfalls vorliegend der Fall ist.

Alternativ oder zusätzlich kann vorgesehen sein, dass mindestens ein Eingabesignal der Mehrzahl von Eingabesignalen zumindest teilweise über eine Internetverbindung 24 an die Zentralsteuervorrichtung 1 übertragen wird.

In diesem Fall müssen die Eingangssignale nicht unmittelbar von einem Sensor stammen, sondern können, ggf. nach einer Weiterverarbeitung, Umformatierung Zwischenspeicherung oder Zusammenführung auf einem Server 25 hinterlegt sein. Daher ist es bevorzugt, dass das mindestens eine Eingangssignal zumindest teilweise Internetdaten aufweist, welche von einem Server 25 über das Internet 19 bereitgestellt werden. Die Übertragung an die Zentralsteuervorrichtung 1 kann dann zyklisch erfolgen und setzt jedenfalls keine dauerhafte Verbindung zwischen der Zentralsteuervorrichtung 1 und dem Server 25 voraus.

Prinzipiell können relevante Daten auf einer Vielzahl von verschiedenen, auch zeitlich wechselnden Servern und in einem jeweils sehr unterschiedlichen Format vorliegen. Um die Zentralsteuervorrichtung 1 von dieser Varianz weitgehend unabhängig zu halten, kann eine Zwischenschicht durch einen speziell hierfür vorgesehenen Server gebildet werden. Dieser kapselt dann gegenüber der Zentralsteuervorrichtung 1 etwaige Veränderungen der die eigentlichen Eingangssignal bereitstellenden Server. Daher ist wie in der Fig. 1 dargestellt vorgesehen, dass das mindestens eine Eingangssignal zumindest teilweise von Datenservern 26 bereitgestellt wird und ein Zwischenserver 27 das mindestens eine Eingangssignal von den Datenservern 26 empfängt und das mindestens eine Eingangssignal und alternativ oder zusätzlich das Externsignal an die Zentralsteuervorrichtung 1 überträgt. Bevorzugt ist, dass der Zwischenserver auch das mindestens eine Eingangssignal gemäß einer Heimautomatisierungsschnittstelle aufbereitet.

Die Möglichkeit der Übertragung des Externsignals an die Zentralsteuervorrichtung 1 setzt dann voraus, dass das Externsignal bereits erzeugt wurde und speziell in dem Zwischenserver 27 erzeugt wurde. Das bedeutet, dass auch die logischen Verknüpfungen sowie deren Benutzerdefinition auf dem Zwischenserver 27 bzw. durch eine Kommunikation der Bedienvorrichtung 15 mit dem Zwischenserver 27 erfolgt ist. Dementsprechend kann auch für nachfolgend beschriebene Interaktionen zwischen der Bedienvorrichtung 15 und der Zentralsteuervorrichtung 1 ebenso vorgesehen sein, dass diese zwischen der Bedienvorrichtung 15 und dem Zwischenserver 27 stattfindet.

Hier ist vorgesehen, dass das Externsignal auf einer Benutzerauswahl aus einer Mehrzahl von Eingangssignalen basiert, wobei die Benutzerauswahl über die tragbare Bedienvorrichtung 15 vornehmbar ist. Auf diese Weise kann der Benutzer also selbst aus einer Reihe von Eingangssignalen wählen, welches oder welche Eingangssignale eine Grundlage für das Externsignal bilden sollen

Insbesondere bei computerähnlichen Bedienvorrichtungen 15 wie dem Smartphone 17 kann deren komfortable Bedienoberfläche für die oben beschriebene Benutzerdefinition oder Benutzerauswahl vorteilhaft eingesetzt werden. Hier stellt die Bedienvorrichtung 15 eine grafische Ein-Ausgabeschnittstelle bereit. Insbesondere dient diese zur Benutzerdefinition der logischen Verknüpfung von Eingangssignalen und/oder zur Benutzerauswahl aus der Mehrzahl von Eingangssignalen. Die grafische Ein-Ausgabeschnittstelle kann dabei eine Piktogramm-basierte Benutzerführung aufweisen um den Komfort bei der Bedienung eines Smartphones 17 oder eines Personalcomputers nachzubilden.

Besonders komfortabel für den Benutzer wird es dann, wenn er nur eine Priorisierung anhand einer Liste von Eingangssignalen vornehmen muss und die eigentliche logische Verknüpfung der Eingangssignale dann automatisch erfolgt. Hier stellt die grafische Ein-Ausgabeschnittstelle eine Benutzerführung zur Priorisierung der Eingangssignale bereit. Die Bedienvorrichtung 15 erzeugt hier basierend auf dieser Priorisierung die logische Verknüpfung der Eingangssignale.

Das Externsignal muss dabei nicht zwingend nur auf stationären Quellen basieren. Vielmehr kann das Externsignal auf einem von einer Mobileinrichtung 28 erzeugten Mobilsignal basieren. Dieses Mobilsignal kann speziell ein Eingangssignal im obigen Sinne bilden. Die Mobileinrichtung 28 ist hier die tragbare Bedienvorrichtung 15, wodurch die Funktionen der Bedienung einerseits und des Bereitstellens von Daten in einer Vorrichtung vereint werden. Hier bietet es sich an, dass das Mobilsignal Geolokationsdaten der Mobileinrichtung 28 umfasst. Wenn ein Smartphone 17 z. B. eine Sensorik für Sonnenschein oder Regen aufweist, dann können diese Daten vor allem zusammen mit den Geolokationsdaten bedeutsam sein. Solche Geolokationsdaten können auch vorteilhaft mit den Signalen von Sensoren wie dem Innenbewegungssensor 8 und dem Garagentorbewegungssensor 9 in Bezug gesetzt werden.

## Patentansprüche

1. Verfahren zum Betreiben eines Heimautomatisierungssystems mit einer Zentralsteuervorrichtung (1) und Peripherievorrichtungen (2) umfassend eine Signalgeberanordnung (4) und eine Aktoranordnung (5), welche Peripherievorrichtungen (2) mit der Zentralsteuervorrichtung (1) nachrichtentechnisch verbindbar und von der Zentralsteuervorrichtung (1) ansteuerbar sind, wobei die Zentralsteuervorrichtung (1) dazu eingerichtet ist, in einem eingeschalteten Betriebszustand die Aktoranordnung (5) aktivierend anzusteuern, wenn ein oder mehrere Auslösesignale der Signalgeberanordnung (4) eine Auslösebedingung erfüllen und dazu eingerichtet ist, die Peripherievorrichtungen (2) ggf. gemäß Direktbedieneingaben anzusteuern,
**dadurch gekennzeichnet,**
**dass** die Zentralsteuervorrichtung (1) die aktivierende Ansteuerung der Aktoranordnung (5) in Abhängigkeit von einer logischen Und-Verknüpfung der Auslösebedingung mit einer Freigabebedingung eines Externsignals durchführt, welches Externsignal außerhalb des Heimautomatisierungssystems erzeugt wurde und dass das Externsignal nicht zu einem Verlassen des eingeschalteten Betriebszustands der Zentralsteuervorrichtung (1) führt, also die Zentralsteuervorrichtung (1) den eingeschalteten Betriebszustand auf das Externsignal beibehält, und dass es sich bei dem Externsignal weder um ein Ausschaltsignal noch um ein Notaussignal noch um
eine Direktbedieneingabe handelt, das Externsignal also verschieden zu den Direktbedieneingaben ist,
**dass** das Externsignal auf einer logischen Verknüpfung von einer Mehrzahl von Eingangssignalen basiert,
**dass** eine Bedienvorrichtung (15) eine grafische Ein-Ausgabeschnittstelle bereitstellt zur Benutzerdefinition der logischen Verknüpfung von Eingangssignalen und/oder zur Benutzerauswahl aus der Mehrzahl von Eingangssignalen und dass die grafische Ein-Ausgabeschnittstelle eine Benutzerführung zur Priorisierung der Eingangssignale bereitstellt, dass die Bedienvorrichtung (15) basierend auf dieser Priorisierung die logische Verknüpfung der Eingangssignale erzeugt, und dass es sich bei der Bedienvorrichtung (15) um ein Smartphone handelt, welches über eine Mobilfunkverbindung, insbesondere ein GSM-Netz (18), oder das Internet (19) eine Verbindung mit der Zentral steuervorrichtung (1) herstellen kann und dass das Externsignal auf einem von einer Mobileinrichtung (28) erzeugten Mobilsignal basiert, wobei das Mobilsignal ein Eingangssignal ist und die Mobileinrichtung (28) die Bedienvorrichtung (15) ist.

2. Verfahren nach Anspruch 1, **dadurch gekennzeichnet, dass** die Signalgeberanordnung (4) eine Sensoranordnung (13) umfasst und dass das Auslösesignal auf einem von der Sensoranordnung (13) erfassten Messwert basiert.

3. Verfahren nach Anspruch 1 oder 2, **dadurch gekennzeichnet, dass** die Auslösebedingung, vorzugsweise über die insbesondere tragbare Bedienvorrichtung (15), einstellbar ist.

4. Verfahren nach Anspruch 1-3, **dadurch gekennzeichnet, dass** mindestens ein Eingabesignal der Mehrzahl von Eingabesignalen zumindest teilweise auf einem jeweiligen Sensorsignal, vorzugsweise einem Umgebungssensorsignal, basiert.

5. Verfahren nach Anspruch 1-4, **dadurch gekennzeichnet, dass** mindestens ein Eingabesignal der Mehrzahl von Eingabesignalen teilweise von einer entfernt angeordneten Externsensoranordnung (22) erzeugt wurden, vorzugsweise, dass das Eingangssignal über eine, insbesondere drahtlose, Datenübertragungsstrecke (23), weiter insbesondere eine Ferndatenübertragungsstrecke, an die Zentralsteuervorrichtung (1) übertragen wird.

6. Verfahren nach einem der Ansprüche 1-5, **dadurch gekennzeichnet, dass** mindestens ein Eingabesignal der Mehrzahl von Eingabesignalen zumindest teilweise über eine Internetverbindung (24) an die Zentralsteuervorrichtung (1) übertragen wird.

7. Verfahren nach Anspruch 6, **dadurch gekennzeichnet, dass** mindestens ein Eingabesignal der Mehrzahl von Eingabesignalen zumindest teilweise Internetdaten umfasst, welche von einem Server (25) über das Internet (19) bereitgestellt werden.

8. Verfahren nach Anspruch 6 oder 7, **dadurch gekennzeichnet, dass** mindestens ein Eingabesignal der Mehrzahl von Eingabesignalen zumindest teilweise von Datenservern (26) bereitgestellt wird und ein Zwischenserver (27) das mindestens eine Eingangssignal von den Datenservern (26) empfängt, vorzugsweise gemäß einer Heimautomatisierungsschnittstelle aufbereitet, und das mindestens eine Eingangssignal und/oder das Externsignal an die Zentralsteuervorrichtung (1) überträgt.

9. Verfahren nach einem der Ansprüche 1-8, **dadurch gekennzeichnet, dass** das Mobilsignal Geolokationsdaten der Mobileinrichtung (28) umfasst.

## Claims

1. Method for operating a home automation system having a central control device (1) and peripheral devices (2) comprising a signal generator arrangement (4) and an actuator arrangement (5), which peripheral devices (2) can be connected to the central control device (1) by communication technology and can be controlled by the central control device (1), wherein the central control device (1) is configured to activate the actuator arrangement (5) in a switched-on operating state if one or more trigger signals from the signal generator arrangement (4) satisfy a trigger condition and is configured to control the peripheral devices (2), if appropriate according to direct operator control inputs, **characterized**
**in that** the central control device (1) activates the actuator arrangement (5) on the basis of a logic AND combination of the trigger condition with a release condition of an external signal, which external signal was generated outside the home automation system, and in that the external signal does not result in the central control device (1) leaving the switched-on operating state, that is to say the central control device (1) retains the switched-on operating state in response to the external signal, and in that the external signal is neither a switch-off signal nor an emergency stop signal nor a direct operator control input, that is to say the external signal differs from the direct operator control inputs,
**in that** the external signal is based on a logic combination of a plurality of input signals,
**in that** an operator control device (15) provides a graphical input/output interface for the user definition of the logic combination of input signals and/or for the user selection from the plurality of input signals, and in that the graphical input/output interface provides user guidance for prioritizing the input signals, in that the operator control device (15) generates the logic combination of the input signals on the basis of this prioritization, and in that the operator control device (15) is a smartphone which can establish a connection to the central control device (1) via a mobile radio connection, in particular a GSM network (18), or the Internet (19), and in that the external signal is based on a mobile signal generated by a mobile device (28), wherein the mobile signal is an input signal and the mobile device (28) is the operator control device (15).

2. Method according to Claim 1, **characterized in that** the signal generator arrangement (4) comprises a sensor arrangement (13), and **in that** the trigger signal is based on a measured value recorded by the sensor arrangement (13) .

3. Method according to Claim 1 or 2, **characterized in that** the trigger condition can preferably be set using the in particular portable operator control device (15).

4. Method according to Claims 1-3, **characterized in that** at least one input signal of the plurality of input signals is at least partially based on a respective sensor signal, preferably an environmental sensor signal.

5. Method according to Claims 1-4, **characterized in that** at least one input signal of the plurality of input signals has been partially generated by a remotely arranged external sensor arrangement (22), preferably **in that** the input signal is transmitted to the central control device (1) via an in particular wireless data transmission path (23), more particularly a remote data transmission path.

6. Method according to one of Claims 1-5, **characterized in that** at least one input signal of the plurality of input signals is at least partially transmitted to the central control device (1) via an Internet connection (24) .

7. Method according to Claim 6, **characterized in that** at least one input signal of the plurality of input signals at least partially comprises Internet data provided by a server (25) via the Internet (19).

8. Method according to Claim 6 or 7, **characterized in that** at least one input signal of the plurality of input signals is at least partially provided by data servers (26), and an intermediate server (27) receives the at least one input signal from the data servers (26), preferably conditions it according to a home automation interface, and transmits the at least one input signal and/or the external signal to the central control device (1) .

9. Method according to one of Claims 1-8, **characterized in that** the mobile signal comprises geolocation data of the mobile device (28).

## Revendications

1. Procédé pour faire fonctionner un système d'automatisation de domicile, comprenant un appareil de commande central (1) et des appareils périphériques (2), incluant un arrangement transmetteur de signal (4) et un arrangement actionneur (5), lesdits appareils périphériques (2) pouvant être connectés informatiquement à l'appareil de commande central (1) et pouvant être commandés par l'appareil de commande central (1), l'appareil de commande central (1) étant conçu pour, dans un état opérationnel mis en circuit, commander l'activation de l'arrangement actionneur (5) lorsqu'un ou plusieurs signaux de déclenchement de l'arrangement transmetteur de signal (4) remplissent une condition de déclenchement et étant conçu pour commander les appareils périphériques (2) le cas échéant selon des saisies de conduite directe,
**caractérisé en ce que**
l'appareil de commande central (1) effectue la commande d'activation de l'arrangement actionneur (5) en fonction d'une relation logique ET entre la condition de déclenchement et une condition de validation d'un signal externe, ledit signal externe ayant été généré en dehors du système d'automatisation de domicile, et **en ce que** le signal externe ne mène pas à une sortie de l'état opérationnel mis en circuit de l'appareil de commande central (1), c'est-à-dire que l'appareil de commande central (1) conserve l'état opérationnel mis en circuit en présence du signal externe, et **en ce que** le signal externe n'est ni un signal de mise hors circuit, ni un signal d'arrêt d'urgence, ni une saisie de conduite directe, le signal externe étant donc différent des saisies de conduite directe,
**en ce que** le signal externe se base sur une relation logique entre une pluralité de signaux d'entrée,
**en ce qu'**un appareil de conduite (15) fournit une interface d'entrée/sortie graphique servant à la définition par l'utilisateur de la relation logique entre les signaux d'entrée et/ou à la sélection par l'utilisateur à partir de la pluralité de signaux d'entrée et **en ce que** l'interface d'entrée/sortie graphique fournit un guide de l'utilisateur pour définir la priorité des signaux d'entrée, **en ce que** l'appareil de conduite (15) génère la relation logique en se basant sur cette priorité définie et ce que l'appareil de conduite (15) est un Smartphone, lequel peut établir une liaison avec l'appareil de commande central (1) par le biais d'une liaison de radiocommunication mobile, notamment un réseau GSM (18) ou l'Internet (19), et **en ce que** le signal externe se base sur un signal mobile généré par un dispositif mobile (28), le signal mobile étant un signal d'entrée et le dispositif mobile (28) étant l'appareil de conduite (15).

2. Procédé selon la revendication 1, **caractérisé en ce que** l'arrangement transmetteur de signal (4) comporte un arrangement capteur (13) et **en ce que** le signal de déclenchement se base sur une valeur mesurée acquise par l'arrangement capteur (13).

3. Procédé selon la revendication 1 ou 2, **caractérisé en ce que** la condition de déclenchement est réglable, notamment par le biais de l'appareil de conduite (15) portable.

4. Procédé selon les revendications 1 à 3, **caractérisé en ce qu'**au moins un signal d'entrée de la pluralité de signaux d'entrée se base au moins partiellement sur un signal d'entrée respectif, de préférence un signal de capteur d'environnement.

5. Procédé selon les revendications 1 à 4, **caractérisé en ce qu'**au moins un signal d'entrée de la pluralité de signaux d'entrée a été généré partiellement par un arrangement capteur externe (22) disposé à distance, de préférence **en ce que** le signal d'entrée est transmis à l'appareil de commande central (1) par le biais d'un trajet de transmission de données (23), notamment sans fil, encore de préférence un trajet de télétransmission de données.

6. Procédé selon l'une des revendications 1 à 5, **caractérisé en ce qu'**au moins un signal d'entrée de la pluralité de signaux d'entrée est transmis au moins partiellement à l'appareil de commande central (1) par le biais d'une connexion Internet (24).

7. Procédé selon la revendication 6, **caractérisé en ce qu'**au moins un signal d'entrée de la pluralité de signaux d'entrée comporte au moins partiellement des données Internet qui sont fournies par un serveur (25) par le biais de l'Internet (19).

8. Procédé selon la revendication 6 ou 7, **caractérisé en ce qu'**au moins un signal d'entrée de la pluralité de signaux d'entrée est au moins partiellement fourni par des serveurs de données (26) et un serveur intermédiaire (27) reçoit l'au moins un signal de données en provenance des serveurs de données (26), de préférence le prépare conformément à une interface d'automatisation de domicile, et transmet l'au moins un signal d'entrée et/ou le signal externe à l'appareil de commande central (1).

9. Procédé selon l'une des revendications 1 à 8, **caractérisé en ce que** le signal mobile comporte des données de géolocalisation du dispositif mobile (28).
